# EUROPEAN PATENT APPLICATION

(11) **EP 4 520 980 A1**
(43) Date of publication of application: **12.03.2025**
(21) Application number: 23862492.8
(22) Date of filing: 08.09.2023
(51) Int. Cl.: F15B 11/17, F15B 13/06, F16H 61/40

(54) **HYDRAULIC SYSTEM FOR HYBRID GEARBOX AND AUTOMOBILE**

(30) Priority: 09.09.2022 CN 202211105287
(71) Applicant: Chery Automobile Co., Ltd., Wuhu, Anhui 241006 (CN)
(72) Inventor: ZHANG, Hengxian, Wuhu, Anhui 241006 (CN); ZHOU, Zhiguang, Wuhu, Anhui 241006 (CN); YE, Yuanlong, Wuhu, Anhui 241006 (CN); LI, Shuangluan, Wuhu, Anhui 241006 (CN)
(74) Representative: Yang, Shu
(86) International application number: PCT/CN2023/117631
(87) International publication number: WO 2024/051798

(57) **Abstract**

Provided are a hydraulic system for a hybrid gearbox and an automobile. The hydraulic system comprises a first drive pump (1), a second drive pump (2), a high-pressure oil passage (3), a low-pressure oil passage (4) and a control valve set (5), wherein the first drive pump (1) is used for being connected to a drive motor (100) of the automobile; the second drive pump (2) is used for being connected to an engine (200) of the automobile; the high-pressure oil passage (3) is connected to the first drive pump (1); the control valve set (5) is respectively connected to the second drive pump (2), the high-pressure oil passage (3) and the low-pressure oil passage (4), and the control valve set (5) is used for controlling, according to the operating condition of the automobile, the oil pressure of the high-pressure oil passage (3) and controlling the amount of oil supplied by the low-pressure oil passage (4) to components to be lubricated (101, 102, 103). By means of the hydraulic system, appropriate hydraulic oil can be provided for the hybrid gearbox according to the actual working condition of the automobile, finally the power consumption can be reduced, and the efficiency of the hybrid gearbox is improved.

## Description

The present disclosure claims priority to Chinese Patent Application No. 202211105287.5, filed on September 9, 2022 and entitled "HYDRAULIC SYSTEM FOR HYBRID GEARBOX AND AUTOMOBILE", the content of which is incorporated herein by reference in its entirety.

### TECHNICAL FIELD

The present disclosure relates to the field of vehicle structural components, in particular, relates to a hydraulic system for a hybrid gearbox and a vehicle.

### BACKGROUND

The gearbox of the hybrid vehicle is simply referred to as a hybrid gearbox and is used to meet the speed variation requirements of the hybrid vehicle. The hybrid gearbox is a transmission system that couples the power of an engine and the power of a motor in a certain manner and can achieve speed variation and torque variation. In order to ensure the normal use of the hybrid gearbox, it is often necessary to forcibly cool or lubricate components to be lubricated (e.g., an overheated motor or a shaft gear component) in the hybrid gearbox via a hydraulic system, and to drive a high-pressure drive component (e.g., a clutch or a parking structure) at the same time.

In the related art, the hydraulic system of the hybrid gearbox includes: a hydraulic pump and a hydraulic control valve. The hydraulic pump is driven by the engine to pump hydraulic oil. The hydraulic pump converts its own mechanical energy into the pressure energy of the hydraulic oil; the hydraulic control valve controls the pressure, flow, and flowing direction of the hydraulic oil, and transmits the hydraulic oil from the hydraulic pump to the high-pressure drive component and the components to be lubricated of the vehicle simultaneously; the high-pressure drive component converts the pressure energy of the hydraulic oil into mechanical energy to complete driving operation; the components to be lubricated are cooled and lubricated by the hydraulic oil.

However, in the case of a medium-high speed working condition, the engine of the vehicle starts to work to drive the vehicle as a power source together with the motor, and in this case, the hydraulic pump is at a high rotation speed under the drive of the engine, such that the hydraulic oil is oversupplied, which affects the fuel saving rate of the vehicle. On the contrary, in a low-speed working condition mode, the vehicle mainly depends on the motor as the power source, the rotation speed of the engine is greatly reduced, and correspondingly, the rotation speed of the hydraulic pump in the hydraulic system is also greatly reduced and the flow of the hydraulic oil is reduced, such that the requirements of cooling and lubricating oil quantity may be difficult to meet, the motor is easily overheated to limit the power, and thus the drivability is affected.

### SUMMARY

Embodiments of the present disclosure provide a hydraulic system for a hybrid gearbox and a vehicle, which can provide appropriate hydraulic oil for the hybrid gearbox according to an actual working condition of the vehicle.

The embodiments of the present disclosure provide a hydraulic system for a hybrid gearbox and a vehicle. The hydraulic system includes a first drive pump, a second drive pump, a high-pressure oil way, a low-pressure oil way, and a control valve group; the first drive pump is connected to a drive motor of a vehicle; the second drive pump is connected to an engine of the vehicle; the high-pressure oil way is connected to the first drive pump and is configured to provide hydraulic oil from the first drive pump to a high-pressure drive component in the hybrid gearbox; the low-pressure oil way is configured to supply oil to components to be lubricated in the hybrid gearbox; the control valve group is separately connected to the second drive pump, the high-pressure oil way, and the low-pressure oil way, and the control valve group is configured to control an oil pressure of the high-pressure oil way and control an oil quantity supplied by the low-pressure oil way to the components to be lubricated based on an operating working condition of the vehicle.

According to some embodiments of the present disclosure, the low-pressure oil way includes a first sub-oil way, a second sub-oil way, and a third sub-oil way that are configured to supply oil to different components to be lubricated, respectively; the control valve group includes a first flow control valve, a second flow control valve, and a third flow control valve; a first oil port of the first flow control valve communicates with an oil outlet of the first drive pump, a second oil port of the first flow control valve separately communicates with the second drive pump and the first sub-oil way, and a first control oil port of the first flow control valve communicates with the first oil port of the first flow control valve; a first oil port of the second flow control valve communicates with the second oil port of the first flow control valve, and a second oil port of the second flow control valve communicates with the second sub-oil way; a first oil port of the third flow control valve communicates with the second oil port of the first flow control valve, and a second oil port of the third flow control valve communicates with the third sub-oil way.

According to some embodiments of the present disclosure, the control valve group further includes a first electromagnetic regulating valve and a second electromagnetic regulating valve; the first oil port of the first electromagnetic regulating valve communicates with the oil outlet of the first drive pump, and a second oil port of the first electromagnetic regulating valve communicates with a second control oil port of the first flow control valve; a first oil port of the second electromagnetic regulating valve communicates with the oil outlet of the first drive pump, and a second oil port of the second electromagnetic regulating valve separately communicates with a control oil port of the second flow control valve and a control oil port of the third flow control valve.

According to some embodiments of the present disclosure, a damping hole is disposed in an oil way between the control oil port of the second flow control valve and the second electromagnetic regulating valve, and a damping hole is disposed in an oil way between the control oil port of the third flow control valve and the second electromagnetic regulating valve.

According to some embodiments of the present disclosure, an aperture of the damping hole between the second flow control valve and the second electromagnetic regulating valve is smaller than an aperture of the damping hole between the third flow control valve and the second electromagnetic regulating valve.

In some embodiments, the first sub-oil way is configured to supply oil to a shaft gear component, the second sub-oil way is configured to supply oil to an auxiliary motor, and the third sub-oil way is configured to supply oil to the drive motor.

According to some embodiments of the present disclosure, the control valve group further includes a pressure reducing valve, the pressure reducing valve is disposed on an oil way between the first flow control valve and the first sub-oil way, a first oil port of the pressure reducing valve separately communicates with the second oil port of the first flow control valve and an oil outlet of the second drive pump, and a second oil port of the pressure reducing valve separately communicates with the first sub-oil way, the first oil port of the second flow control valve, and the first oil port of the third flow control valve.

In some embodiments, a damping hole is disposed between the second oil port of the pressure reducing valve and a control oil port of the pressure reducing valve, and the first sub-oil way is provided with a damping hole therein.

In some embodiments, the hydraulic system further includes a first check valve, an oil inlet of the first check valve communicates with an oil inlet of the second drive pump, and an oil outlet of the first check valve communicates with the oil outlet of the second drive pump.

In some embodiments, the hydraulic system further includes a second check valve, an oil inlet of the second check valve communicates with an oil inlet of the first drive pump, and an oil outlet of the second check valve communicates with an oil outlet of the first drive pump.

In some embodiments, the hydraulic system further includes a third check valve, the third check valve is connected between the oil outlet of the first drive pump and the control valve group, an oil inlet of the third check valve communicates with the oil outlet of the first drive pump, and an oil outlet of the third check valve separately communicates with the first oil port of the first flow control valve, the first oil port of the first electromagnetic regulating valve, and the first oil port of the second electromagnetic regulating valve.

In some embodiments, the hydraulic system further includes a fourth check valve, the fourth check valve is connected between the oil outlet of the second drive pump and the control valve group, an oil inlet of the fourth check valve communicates with the oil outlet of the second drive pump, and an oil outlet of the fourth check valve separately communicates with the second oil port of the first flow control valve and the first oil port of the pressure reducing valve.

According to some embodiments of the present disclosure, the hydraulic system further includes a filter. The filter is connected between an oil tank and an oil inlet of the first drive pump as well as an oil inlet of the second drive pump.

In some embodiments, the first flow control valve is a three-position four-way proportional reversing valve, and the second flow control valve and the third flow control valve are both two-position three-way proportional reversing valves.

In some embodiments, the high-pressure drive component includes a clutch.

According to some embodiments of the present disclosure, a vehicle is further provided. The vehicle includes a motor, an engine, a gearbox, and the hydraulic system described above, where the motor and the engine are both connected to the gearbox, and the hydraulic system is connected to a box body of the gearbox.

### BRIEF DESCRIPTION OF THE DRAWINGS

FIG. 1 is a schematic diagram of the control of a hydraulic system for a hybrid gearbox according to some embodiments of the present disclosure;
FIG. 2 is a schematic diagram of the control of another hydraulic system for a hybrid gearbox according to some embodiments of the present disclosure;
FIG. 3 is an oil way orientation diagram in a hydraulic system in a case of a medium-low speed and low torque working condition according to some embodiments of the present disclosure;
FIG. 4 is an oil way orientation diagram in a hydraulic system in a case of a medium-low speed and high torque working condition according to some embodiments of the present disclosure;
FIG. 5 is an oil way orientation diagram in a hydraulic system in a case of a working condition of medium-high speed and low torque or medium-high speed and high torque according to some embodiments of the present disclosure; and
FIG. 6 is an oil way orientation diagram in a hydraulic system in a case of a reverse driving working condition according to some embodiments of the present disclosure.

The symbols in the figures are illustrated as follows:
1. first drive pump; 2. second drive pump; 3. high-pressure oil way;
4. low-pressure oil way; 41. first sub-oil way; 42. second sub-oil way; 43. third sub-oil way;
5. control valve group; 511. first flow control valve; 512. second flow control valve; 513. third flow control valve; 514. first electromagnetic regulating valve; 515. second electromagnetic regulating valve; 516. pressure reducing valve;
6. first check valve; 7. second check valve; 8. third check valve; 9. fourth check valve; 10. filter;
101. first component to be lubricated; 102. second component to be lubricated; 103. third component to be lubricated; 201. high-pressure drive component;
100. drive motor; 200. engine; and 300. damping hole.

### DETAILED DESCRIPTION

For clearer descriptions of the objectives, technical solutions, and advantages of the present disclosure, embodiments of the present disclosure are further described in detail hereinafter with reference to the accompanying drawings.

For clearer descriptions of the objectives, technical solutions, and advantages of the present disclosure, embodiments of the present disclosure are further described in detail hereinafter with reference to the accompanying drawings.

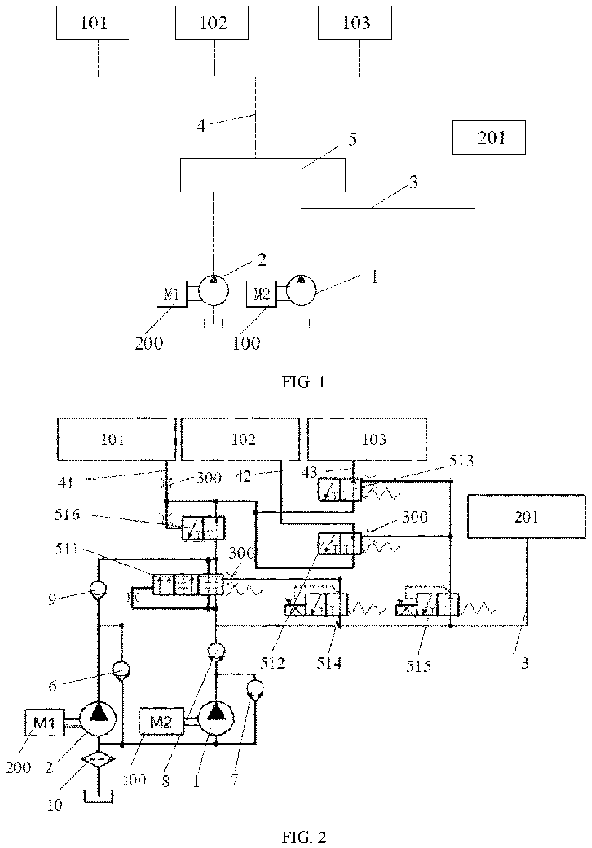

The embodiments of the present disclosure provide a hydraulic system for a hybrid gearbox. As shown in FIG. 1, the hydraulic system includes a first drive pump 1, a second drive pump 2, a high-pressure oil way 3, a low-pressure oil way 4, and a control valve group 5.

The first drive pump 1 is connected to a drive motor 100 of a vehicle, and the second drive pump 2 is connected to an engine 200 of the vehicle. The high-pressure oil way 3 is connected to the first drive pump 1, and is configured to supply the hydraulic oil from the first drive pump 1 to a high-pressure drive component in the hybrid gearbox. The low-pressure oil way 4 is configured to supply oil to components to be lubricated in the hybrid gearbox. The control valve group 5 is separately connected to the second drive pump 2, the high-pressure oil way 3, and the low-pressure oil way 4, and the control valve group 5 is configured to control the oil pressure of the high-pressure oil way 3 and control the oil quantity supplied by the low-pressure oil way 4 to the components to be lubricated based on the operating working condition of the vehicle.

According to the hydraulic system provided in the embodiments of the present disclosure, the hydraulic system includes the first drive pump 1 and the second drive pump 2, the first drive pump 1 is driven by the drive motor, and the second drive pump 2 is driven by the engine, such that the operating states of the first drive pump 1 and the second drive pump 2 can be correspondingly controlled by combining the working condition of the vehicle, and thus the flow rate and the pressure of the hydraulic oil pumped by the first drive pump and the second drive pump can be controlled.

In addition, the hydraulic system includes the control valve group 5 therein, and the control valve group 5 is separately connected to the second drive pump 2, the high-pressure oil way 3, and the low-pressure oil way 4, and the control valve group 5 is configured to control the oil pressure of the high-pressure oil way 3 and control the oil quantity supplied by the low-pressure oil way to the components to be lubricated based on the operating working condition of the vehicle, such that the hydraulic oil pumped by the first drive pump 1 and the second drive pump 2 can be transmitted to the components to be lubricated and the high-pressure drive component, respectively, by controlling the control valve group 5, the oil pressure of the high-pressure oil way 3 is controlled simultaneously, and finally the requirements for the hydraulic oil of the components to be lubricated and the high-pressure drive component can be met in the case of different working conditions.

In summary, the hydraulic system can meet the cooling and lubricating requirements of different components to be lubricated on the basis of meeting the oil pressure required by the high-pressure drive component, such that the transmission requirement of the gearbox and the oil saving rate of the vehicle are improved, and the loss of the drive motor is reduced.

Exemplarily, the high-pressure drive component 201 is a clutch or the like. After the hydraulic oil drives the clutch to operate, the engine is enabled to be engaged with the hybrid gearbox, such that the engine serves as the power source of the vehicle.

Exemplarily, the components to be lubricated includes a shaft gear component in the gearbox, a drive motor, or the like.

Exemplarily, the component to be lubricated includes a first component to be lubricated 101, a second component to be lubricated 102, and a third component to be lubricated 103. The first component to be lubricated 101 is a shaft gear component, the second component to be lubricated 102 is an auxiliary motor, and the third component to be lubricated 103 is a drive motor. The drive motor is configured to provide power for the vehicle. The auxiliary motor is configured to cooperate with the engine to work and support the engine to start and stop, can also charge the battery pack of the vehicle, and simultaneously cooperates with the engine to serve as auxiliary power output. The auxiliary motor cannot directly drive the vehicle. When the vehicle enters an electric vehicle (EV) mode, the auxiliary motor does not operate, and the drive motor is responsible for driving to provide power for the vehicle.

In the embodiments of the present disclosure, the operating working condition of the vehicle can be divided based on the rotation speed and the torque outputted from a power system to the wheel end of the vehicle. For example, a high rotation speed and high torque outputted from the power system to the wheel end of the vehicle is classified as a working condition in which the vehicle is at a medium-high speed and high torque. A low rotation speed and low torque outputted from the power system to the wheel end of the vehicle is classified as a working condition in which the vehicle is at a low speed and low torque. A low rotation speed and high torque outputted from the power system to the wheel end of the vehicle is classified as a working condition in which the vehicle is at a low speed and high torque. A high rotation speed and low torque outputted from the power system to the wheel end of the vehicle is classified as a working condition in which the vehicle is at a medium-high speed and low torque.

During implementation, the variation range of the rotation speed outputted from the power system to the wheel end of the vehicle is divided into three numerical value intervals, and the three numerical value intervals correspond to high rotation speed, medium rotation speed, and low rotation speed, respectively. Similarly, the variation range of the torque outputted from the power system is divided into two numerical value intervals, corresponding to low torque and high torque, respectively.

The rotation speed of the wheel end of the vehicle is proportional to the speed of the vehicle. That is, the rotation speed of the wheel end of the vehicle is high, and the speed of the vehicle is high. The rotation speed of the wheel end of the vehicle is low, and the speed of the vehicle is low. Thus, the working condition of the vehicle is also divided based on the traveling speed of the vehicle and the torque outputted by the power system.

The division of the speed of the vehicle may refer to the maximum traveling speed of the vehicle. Taking the following as an example, the maximum traveling speed of a vehicle is 100 km/h, and when the vehicle travels at a speed of no more than 30% of the maximum traveling speed (for example, 30 km/h), it should be understood that the vehicle travels at a low speed. When the vehicle travels at a speed of no less than 60% of the maximum traveling speed (for example, 60 km/h), it should be understood that the vehicle travels at a high speed; in the case that the vehicle travels at a speed of more than 30% and less than 60% of the maximum traveling speed (for example, 60 km/h), it should be understood that the vehicle travels at a medium speed.

It should be noted that the speed described above is only an example, and the speed of the vehicle at a low speed and at a medium-high speed provided in the embodiments of the present disclosure is not limited thereto. The same is true for torque, which is not reiterated herein.

The low-pressure oil way and the high-pressure oil way according to the embodiments of the present disclosure are divided based on the oil pressure of the hydraulic oil flowing therethrough, so as to supply oil to different components, respectively. For example, the low-pressure oil way supplies oil only to components that need to be lubricated and cooled, and the oil pressure requirement for the low-pressure oil way is low. The high-pressure oil way supplies oil only to components that need to be driven, and the oil pressure of the high-pressure oil way is high.

FIG. 2 is a schematic diagram of the control of another hydraulic system for a hybrid gearbox according to some embodiments of the present disclosure. With reference to FIG. 2, in some embodiments, the low-pressure oil way 4 includes a first sub-oil way 41, a second sub-oil way 42, and a third sub-oil way 43; the first sub-oil way 41, the second sub-oil way 42, and the third sub-oil way 43 are configured to supply oil to different components to be lubricated, respectively. For example, the first sub-oil way 41 is configured to supply oil to the first component to be lubricated 101, the second sub-oil way 42 is configured to supply oil to the second component to be lubricated 102, and the third sub-oil way 43 is configured to supply oil to the third component to be lubricated 103.

The control valve group 5 includes a first flow control valve 511, a second flow control valve 512, and a third flow control valve 513. A first oil port of the first flow control valve 511 communicates with an oil outlet of the first drive pump 1, a second oil port of the first flow control valve 511 separately communicates with the second drive pump 2 and the first sub-oil way 41, and a first control oil port of the first flow control valve 511 communicates with the first oil port of the first flow control valve 511. A first oil port of the second flow control valve 512 communicates with the second oil port of the first flow control valve 511, and a second oil port of the second flow control valve 512 communicates with the second sub-oil way 42. A first oil port of the third flow control valve 513 communicates with the second oil port of the first flow control valve 511, and a second oil port of the third flow control valve 513 communicates with the third sub-oil way 43.

In the above embodiments, the first oil port of the first flow control valve 511 communicates with the high-pressure oil way 3, and the first oil port and the first control oil port of the first flow control valve 511 communicate, such that the oil pressure of the first oil port of the first flow control valve 511 are adjusted by controlling the position of the valve core of the first flow control valve 511, thereby adjusting the oil pressure of the high-pressure oil way 3.

Meanwhile, the second oil port of the first flow control valve 511 communicates with the first sub-oil way 41, such that oil can be supplied to the first component to be lubricated 101. Meanwhile, the second flow control valve 512 communicates with the second sub-oil way 42, and the third flow control valve 513 communicates with the third sub-oil way 43, such that oil can be supplied separately to the second component to be lubricated 102 and the third component to be lubricated 103, and finally oil supply to different components to be lubricated can be achieved.

**In** some embodiments, the control valve group 5 further includes a first electromagnetic regulating valve 514 and a second electromagnetic regulating valve 515. A first oil port of the first electromagnetic regulating valve 514 communicates with the oil outlet of the first drive pump 1, and a second oil port of the first electromagnetic regulating valve 514 communicates with a second control oil port of the first flow control valve 511. That is, the first flow control valve 511 is a hydraulic control valve.

A first oil port of the second electromagnetic regulating valve 515 communicates with the oil outlet of the first drive pump 1, and a second oil port of the second electromagnetic regulating valve 515 separately communicates with a control oil port of the second flow control valve 512 and a control oil port of the third flow control valve 513. That is, the second flow control valve 512 and the third flow control valve 513 are both hydraulic control valves.

After the first electromagnetic regulating valve 514 is turned on, the oil pressure applied to the second control oil port of the first flow control valve 511 is controlled by controlling the opening degree of the first electromagnetic regulating valve 514, and a spring arranged in the first flow control valve 511 is pushed to move under different oil pressures, so as to adjust the opening degree of the first flow control valve 511, thereby controlling the flow and pressure of the hydraulic oil flowing out of the second oil port of the first flow control valve 511.

Similarly, after the second electromagnetic regulating valve 515 is turned on, the oil pressure applied to the control oil port of the second flow control valve 512 and the control oil port of the third flow control valve 513 is controlled by controlling the opening degree of the second electromagnetic regulating valve 515, and springs arranged in the second flow control valve 512 and the third flow control valve 513 are pushed to move under different oil pressures, so as to adjust the opening degree of the second flow control valve 512 and the opening degree of the third flow control valve 513, thereby controlling the flow and pressure of the hydraulic oil flowing out of the second oil port of the second flow control valve 512 and the second oil port of the third flow control valve 513.

Exemplarily, the control valve group 5 further includes a pressure reducing valve 516, and the pressure reducing valve 516 is disposed on an oil way between the first flow control valve 511 and the first sub-oil way 41. A first oil port of the pressure reducing valve 516 separately communicates with the second oil port of the first flow control valve 511 and an oil outlet of the second drive pump 2, and a second oil port of the pressure reducing valve 516 separately communicates with the first sub-oil way 41, the first oil port of the second flow control valve 512, and the first oil port of the third flow control valve 513.

The control oil port of the pressure reducing valve 516 communicates with the second oil port of the pressure reducing valve 516, such that the oil pressure at the second oil port is controlled by controlling the position of the valve core of the pressure reducing valve 516. In this way, the oil pressure of the hydraulic oil entering the first sub-oil way 41 is further controlled by the arrangement of the pressure reducing valve 516, thereby controlling the pressure of the hydraulic oil flowing to different components to be lubricated.

It should be noted that, for the first flow control valve 511 provided in the embodiments of the present disclosure, the oil pressure of the first oil port (i.e., the oil pressure at the inlet end) of the first flow control valve 511 is adjusted, such that the oil pressure of the hydraulic oil entering the high-pressure oil way 3 meets the requirement of the high-pressure drive component 201. That is, the oil pressure at the first oil port is controlled by controlling the position of the valve core of the first flow control valve 511, and the oil pressure of the high-pressure oil way 3 is finally controlled.

For the pressure reducing valve 516, the oil pressure of the second oil port (i.e., the oil pressure at the outlet end) of the pressure reducing valve 516 is adjusted, such that the oil pressure of the hydraulic oil entering the low-pressure oil way 4 meets the oil pressure requirements of different components to be lubricated.

Exemplarily, the first electromagnetic regulating valve 514 and the second electromagnetic regulating valve 515 are both two-position three-way electromagnetic reversing valves.

Exemplarily, the first flow control valve 511 is a three-position four-way valve. The first flow control valve 511 is further provided with a third oil port and a fourth oil port. The third oil port of the first flow control valve 511 communicates with the first oil port of the first flow control valve 511. The fourth oil port of the first flow control valve 511 separately communicates with the second oil port of the first flow control valve 511 and the first sub-oil way 41.

In the case that the first flow control valve 511 is at a right position, the first flow control valve 511 is turned off, that is, the first oil port and the second oil port of the first flow control valve 511 are disconnected, and the third oil port and the fourth oil port are also disconnected. In the case that the first flow control valve 511 is at a middle position, the first oil port and the second oil port of the first flow control valve 511 communicate, and the third oil port and the fourth oil port of the first flow control valve 511 are disconnected. In the case that the first flow control valve 511 is at a left position, the first oil port and the second oil port of the first flow control valve 511 communicate, and the third oil port and the fourth oil port of the first flow control valve 511 also communicate.

In the case that the valve core of the first flow control valve 511 is at the middle position, the flow of the hydraulic oil flowing out is minimum, and the pressure is also low. In the case that the valve core of the first flow control valve 511 is at the left position, the flow of the hydraulic oil flowing out is maximum, and the pressure is also high. The valve core of the first flow control valve 511 can randomly adjust the flow and pressure between the middle position and the left position.

Exemplarily, the second flow control valve 512 is a two-position three-way valve. In the case that the second flow control valve 512 is at the right position, the first oil port and the second oil port of the second flow control valve 512 communicate. In the case that the second flow control valve 512 is at the left position, the first oil port and the second oil port of the second flow control valve 512 are disconnected. The third oil port of the second flow control valve 512 is blocked.

Exemplarily, the third flow control valve 513 is a two-position three-way valve. In the case that the third flow control valve 513 is at the right position, the first oil port and the second oil port of the third flow control valve 513 communicate. In the case that the third flow control valve 513 is at the left position, the first oil port and the second oil port of the third flow control valve 513 are disconnected. The third oil port of the third flow control valve 513 is blocked.

Alternatively, in other embodiments, the second flow control valve 512 and the third flow control valve 513 are two-position two-way valves.

In the embodiments of the present disclosure, the first flow control valve 511 is a three-position four-way proportional reversing valve, and the second flow control valve 512 and the third flow control valve 513 are both two-position three-way proportional reversing valves. With the adoption of the proportional reversing valves, the opening degree of the outlet end is gradually adjusted by controlling the flow of the hydraulic oil entering the control oil port.

Exemplarily, with continued reference to FIG. 2, the hydraulic system provided in the embodiments of the present disclosure further includes damping holes 300. The damping hole 300 is disposed in an oil way between the first oil port and the first control oil port of the first flow control valve 511. The damping hole 300 is disposed in an oil way between the second control oil port of the first flow control valve 511 and the first electromagnetic regulating valve 514. In this way, in the case that the opening degree of the first flow control valve 511 is adjusted by the first electromagnetic regulating valve 514, it can be ensured that the opening degree of the first flow control valve 511 varies slowly. Similarly, the oil pressure of the first oil port of the first flow control valve 511 is also enabled to vary slowly.

The damping hole 300 is disposed in an oil way between the control oil port of the second flow control valve 512 and the second electromagnetic regulating valve 515, and the damping hole 300 is disposed in an oil way between the control oil port of the third flow control valve 513 and the second electromagnetic regulating valve 515.

In the case that the opening degree of the second flow control valve 512 is adjusted by the second electromagnetic regulating valve 515, the damping hole 300 disposed between the second electromagnetic regulating valve 515 and the second flow control valve 512 enables the opening degree of the second flow control valve 512 to vary slowly. Similarly, in the case that the opening degree of the third flow control valve 513 is adjusted by the second electromagnetic regulating valve 515, the damping hole 300 disposed between the second electromagnetic regulating valve 515 and the third flow control valve 513 enables the opening degree of the third flow control valve 513 to vary slowly. In this way, sudden variations in the opening degree are prevented, which would cause severe oil pressure fluctuations and further affect the traveling of the vehicle.

Exemplarily, the aperture of the damping hole 300 disposed between the control oil port of the second flow control valve 512 and the second electromagnetic regulating valve 515 is smaller than the aperture of the damping hole 300 disposed in the oil way between the control oil port of the third flow control valve 513 and the second electromagnetic regulating valve 515. In this way, the limited hydraulic oil is preferentially supplied to the third component to be lubricated 103 for cooling and lubrication.

In some embodiments, the damping hole 300 is disposed between the control oil port of the first pressure reducing valve 516 and the second oil port of the first pressure reducing valve 516. The damping hole 300 is further disposed between the first sub-oil way 41 (i.e., the first component to be lubricated 101) and the second oil port of the first pressure reducing valve 516.

By disposing the damping hole 300 near the oil port of the first pressure reducing valve 516, the oil pressure of the second oil port of the first pressure reducing valve 516 is enabled to vary slowly.

In the embodiments of the present disclosure, the control valve group 5 is arranged to be the above structure, such that the vehicle can be reasonably supplied with oil under different working conditions.

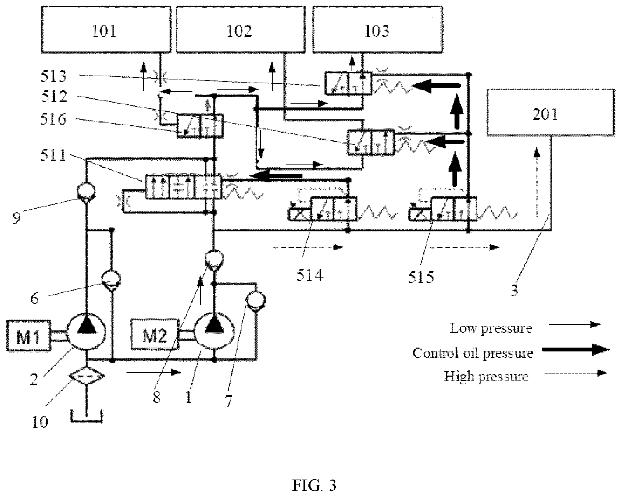

For example, in the case that the vehicle is in a traveling state of low speed and low torque, referring to FIG. 3, the drive motor serves as the main power source for the vehicle, the engine does not serve as the power source, and the vehicle enters the EV mode. The flow of the hydraulic oil required by the components to be lubricated for lubrication and cooling is small, such that the second drive pump 2 does not need to be turned on, that is, the second drive pump 2 does not need to supply oil. Under the drive of the drive motor, the first drive pump 1 pumps the hydraulic oil out from the oil tank 10, and then supplies the hydraulic oil to the high-pressure drive component 201 and the components to be lubricated simultaneously.

In this case, after the first electromagnetic regulating valve 514 is controlled to be powered on, the opening degree of the first electromagnetic regulating valve 514 is adjusted to control the opening degree of the first flow control valve 511, and the oil pressure at the second oil port of the first flow control valve 511 is further controlled, such that the oil pressure of the hydraulic oil flowing out through the first flow control valve 511 is at a low level. Meanwhile, by controlling the position of the valve core of the first flow control valve 511 to change between the middle position and the left position, the oil pressure at the first oil port of the first flow control valve 511 is reduced, and the oil pumping pressure of the first drive pump 1 is further reduced, such that the oil pressure of the high-pressure oil way 3 can meet the requirement of the high-pressure drive component 201. Therefore, the first drive pump 1 is in a low-pressure oil pumping working state, and the energy consumption is low. Meanwhile, the opening degree of the second electromagnetic regulating valve 515 is adjusted to control the opening degree of the second flow control valve 512 and the opening degree of the third flow control valve 513, and in cooperation with the damping hole 300, the limited hydraulic oil can be preferentially supplied to the third component to be lubricated 103 for cooling and lubrication.

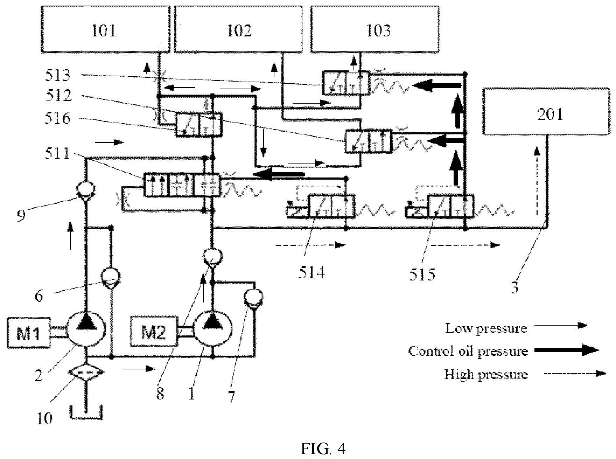

In the case that the vehicle is in a working condition of low speed and high torque, the drive motor and the engine are both the power source. Referring to FIG. 4, due to the high heat generation of the third component to be lubricated 103 (drive motor) and the low rotation speed of the first drive pump 1, the first drive pump 1 cannot meet the oil quantity and oil pressure requirements required by the hydraulic system, and in this case, the second drive pump 2 is required for auxiliary oil supply. The second drive pump 2 is driven by the engine and assists the first drive pump 1 in supplying oil to the hydraulic system.

In this case, the flow path of the hydraulic oil is as follows. The second drive pump 2 pumps the hydraulic oil out from the oil tank to the pressure reducing valve 516, and supplies oil to the first component to be lubricated 101, the second component to be lubricated 102, and the third component to be lubricated 103 via the pressure reducing valve 516 separately. The oil quantity of the low-pressure oil way 4 is sufficient, such that the requirements of cooling and lubrication oil quantity of other components to be lubricated can be met while meeting the cooling requirement of the third component to be lubricated 103 (drive motor).

The oil way orientation of the first drive pump 1 supplying oil to the hydraulic system is consistent with that of the vehicle described above in a traveling state of low speed and low torque, which is not reiterated herein.

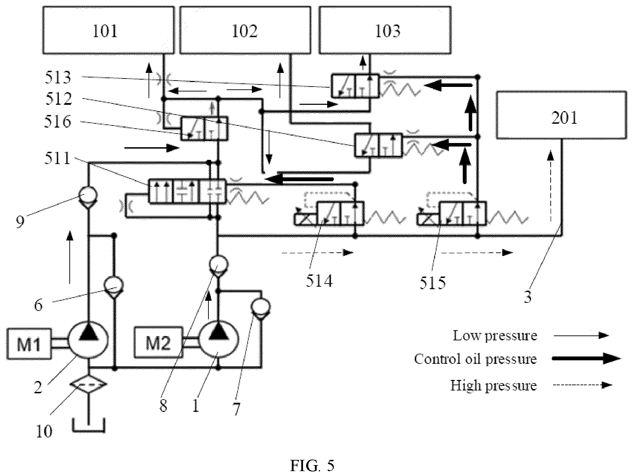

In the case that the vehicle is in a working condition of medium-high speed and low torque or medium-high speed and high torque, the drive motor and the engine simultaneously serve as the power source of the vehicle. Referring to FIG. 5, the first drive pump 1 and the second drive pump 2 are at high rotation speeds, and the oil supply and oil pressure requirements of the hydraulic system are simultaneously met.

The flow path of the hydraulic oil is as follows. The first drive pump 1 pumps the hydraulic oil out from the oil tank and supplies oil to the high-pressure drive component 201 through the high-pressure oil way 3. Meanwhile, the position of the valve core of the first flow control valve 511 is adjusted by the first electromagnetic regulating valve 514, so as to reduce the oil pumping pressure of the first drive pump 1, such that the oil pressure of the hydraulic oil flowing out through the first flow control valve 511 is at a low level, and thus the first drive pump 1 is also in a low-pressure oil pumping working state and the energy consumption is low. In addition, the second drive pump 2 pumps the hydraulic oil out from the oil tank, and the hydraulic oil enters the low-pressure oil way 4 through the pressure reducing valve 516; the low oil pressure ensures that the second drive pump 2 has low energy consumption, and thus the requirements of cooling and lubrication oil quantity of different components to be lubricated are met.

With continued reference to FIG. 2, in some embodiments, the hydraulic system further includes a first check valve 6, an oil inlet of the first check valve 6 communicates with an oil inlet of the second drive pump 2, and an oil outlet of the first check valve 6 communicates with the oil outlet of the second drive pump 2.

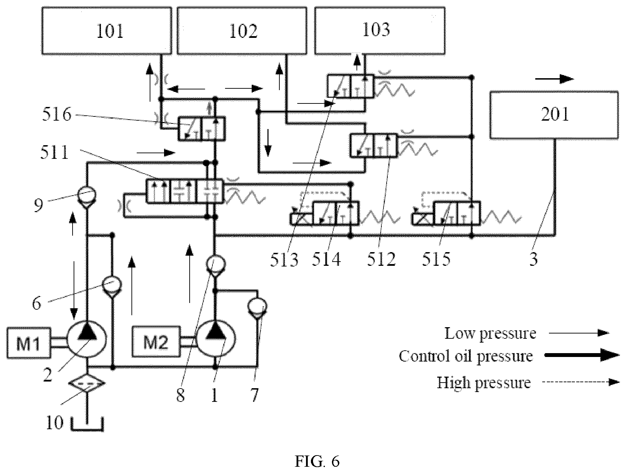

With the arrangement of the first check valve 6 between the oil outlet of the second drive pump 2 and the oil tank, in the case that the vehicle is in reverse gear, as shown in FIG. 6, the first check valve 6 can prevent the phenomenon of air suction in the second drive pump 2, which would damage pipelines.

In some embodiments, the hydraulic system further includes a second check valve 7, an oil inlet of the second check valve 7 communicates with an oil inlet of the first drive pump 1, and an oil outlet of the second check valve 7 communicates with the oil outlet of the first drive pump 1. With the arrangement of the second check valve 7, the phenomenon of air suction in the first drive pump 1 can be prevented, which would damage pipelines.

In some embodiments, the hydraulic system further includes a third check valve 8, the third check valve 8 is connected between the oil outlet of the first drive pump 1 and the control valve group 5, an oil inlet of the third check valve 8 communicates with the oil outlet of the first drive pump 1, and an oil outlet of the third check valve 8 separately communicates with the first oil port of the first flow control valve 511, the first oil port of the first electromagnetic regulating valve 514, and the first oil port of the second electromagnetic regulating valve 515.

The third check valve 8 is configured to prevent the hydraulic oil in the first flow control valve 511, the first electromagnetic regulating valve 514, and the second electromagnetic regulating valve 515 from flowing back into the first drive pump 1.

In some embodiments, the hydraulic system further includes a fourth check valve 9, the fourth check valve 9 is connected between the oil outlet of the second drive pump 2 and the pressure reducing valve 516, an oil inlet of the fourth check valve 9 communicates with the oil outlet of the second drive pump 2, and an oil outlet of the fourth check valve 9 separately communicates with the second oil port of the first flow control valve 511 and the first oil port of the pressure reducing valve 516.

The fourth check valve 9 is configured to prevent the hydraulic oil in the first flow control valve 511 and the pressure reducing valve 516 from flowing back into the second drive pump 2.

In some embodiments, the hydraulic system further includes a filter 10, and the filter 10 is connected between the oil tank, the first drive pump 1 as well as the second drive pump 2. The filter 10 separately communicates with an oil inlet of the first drive pump 1 and an oil inlet of the second drive pump 2.

With the arrangement of the filter 10, impurities in the hydraulic oil are filtered to prevent impurities from blocking the first drive pump 1 and the second drive pump 2, which would affect the operation of the vehicle.

The hydraulic system provided in the embodiments of the present disclosure has a simple and compact structure, and is convenient for integrated design on the hybrid gearbox. In addition, the oil pressure of the high-pressure oil way 3 is adjusted in real time through the first electromagnetic regulating valve 514, and the requirement of the high-pressure drive component 201 in the hybrid gearbox is met; meanwhile, the cooling flow of the auxiliary motor and the drive motor is controlled through the second electromagnetic regulating valve 515, such that the cooling flow distributed to the auxiliary motor and the drive motor can be adjusted in real time based on the stator feedback temperature of the auxiliary motor and the drive motor, the requirements for cooling and lubricating the oil ways of the shaft gear and the clutch are met while cooling the auxiliary motor and the drive motor, and finally the power consumption is reduced and the efficiency of the hybrid gearbox is improved.

Moreover, the vehicle includes a motor, an engine, a gearbox, and the hydraulic system described above, the motor and the engine are both connected to the gearbox, and the hydraulic system is connected to the box body of the gearbox.

The above vehicle has the same beneficial effects as the hydraulic system described above, which is not reiterated herein.

Described above are merely optional embodiments of the present disclosure and are not intended to limit the present disclosure. Any modifications, equivalent substitutions, improvements, and the like, made within the spirit and principle of the present disclosure, should be included in the protection scope of the present disclosure.

## Claims

1. A hydraulic system for a hybrid gearbox, comprising a first drive pump (1), a second drive pump (2), a high-pressure oil way (3), a low-pressure oil way (4), and a control valve group (5), wherein
the first drive pump (1) is connected to a drive motor (100) of a vehicle;
the second drive pump (2) is connected to an engine (200) of the vehicle;
the high-pressure oil way (3) is connected to the first drive pump (1) and is configured to supply hydraulic oil from the first drive pump (1) to a high-pressure drive component in the hybrid gearbox;
the low-pressure oil way (4) is configured to supply oil to components to be lubricated in the hybrid gearbox; and
the control valve group (5) is separately connected to the second drive pump (2), the high-pressure oil way (3), and the low-pressure oil way (4), and the control valve group (5) is configured to control an oil pressure of the high-pressure oil way (3) and control an oil quantity supplied by the low-pressure oil way to the components to be lubricated based on an operating working condition of the vehicle.

2. The hydraulic system according to claim 1, wherein the low-pressure oil way (4) comprises a first sub-oil way (41), a second sub-oil way (42), and a third sub-oil way (43) that are configured to supply oil to different components to be lubricated, respectively;
the control valve group (5) comprises a first flow control valve (511), a second flow control valve (512), and a third flow control valve (513);
a first oil port of the first flow control valve (511) communicates with an oil outlet of the first drive pump (1), a second oil port of the first flow control valve (511) separately communicates with the second drive pump (2) and the first sub-oil way (41), and a first control oil port of the first flow control valve (511) communicates with the first oil port of the first flow control valve (511);
a first oil port of the second flow control valve (512) communicates with the second oil port of the first flow control valve (511), and a second oil port of the second flow control valve (512) communicates with the second sub-oil way (42); and
a first oil port of the third flow control valve (513) communicates with the second oil port of the first flow control valve (511), and a second oil port of the third flow control valve (513) communicates with the third sub-oil way (43).

3. The hydraulic system according to claim 2, wherein the control valve group (5) further comprises a first electromagnetic regulating valve (514) and a second electromagnetic regulating valve (515);
a first oil port of the first electromagnetic regulating valve (514) communicates with the oil outlet of the first drive pump (1), and a second oil port of the first electromagnetic regulating valve (514) communicates with a second control oil port of the first flow control valve (511); and
a first oil port of the second electromagnetic regulating valve (515) communicates with the oil outlet of the first drive pump (1), and a second oil port of the second electromagnetic regulating valve (515) separately communicates with a control oil port of the second flow control valve (512) and a control oil port of the third flow control valve (513).

4. The hydraulic system according to claim 3, wherein a damping hole (300) is disposed in an oil way between the control oil port of the second flow control valve (512) and the second electromagnetic regulating valve (515), and a damping hole (300) is disposed in an oil way between the control oil port of the third flow control valve (513) and the second electromagnetic regulating valve (515).

5. The hydraulic system according to claim 4, wherein an aperture of the damping hole (300) between the second flow control valve (512) and the second electromagnetic regulating valve (515) is smaller than an aperture of the damping hole (300) between the third flow control valve (513) and the second electromagnetic regulating valve (515).

6. The hydraulic system according to claim 5, wherein the first sub-oil way (41) is configured to supply oil to a shaft gear component, the second sub-oil way (42) is configured to supply oil to an auxiliary motor, and the third sub-oil way (43) is configured to supply oil to the drive motor.

7. The hydraulic system according to claim 2, wherein the control valve group (5) further comprises a pressure reducing valve (516), the pressure reducing valve (516) is disposed on an oil way between the first flow control valve (511) and the first sub-oil way (41), a first oil port of the pressure reducing valve (516) separately communicates with the second oil port of the first flow control valve (511) and an oil outlet of the second drive pump (2), and a second oil port of the pressure reducing valve (516) separately communicates with the first sub-oil way (41), the first oil port of the second flow control valve (512), and the first oil port of the third flow control valve (513).

8. The hydraulic system according to claim 7, wherein a damping hole (300) is disposed between the second oil port of the pressure reducing valve (516) and a control oil port of the pressure reducing valve (516), and the first sub-oil way (41) is provided with a damping hole (300) therein.

9. The hydraulic system according to any one of claims 1 to 8, further comprising a first check valve (6), wherein an oil inlet of the first check valve (6) communicates with an oil inlet of the second drive pump (2), and an oil outlet of the first check valve (6) communicates with the oil outlet of the second drive pump (2).

10. The hydraulic system according to any one of claims 1 to 8, further comprising a second check valve (7), wherein an oil inlet of the second check valve (7) communicates with an oil inlet of the first drive pump (1), and an oil outlet of the second check valve (7) communicates with an oil outlet of the first drive pump (1).

11. The hydraulic system according to claim 3, further comprising a third check valve (8), wherein the third check valve (8) is connected between the oil outlet of the first drive pump (1) and the control valve group (5), an oil inlet of the third check valve (8) communicates with the oil outlet of the first drive pump (1), and an oil outlet of the third check valve (8) separately communicates with the first oil port of the first flow control valve (511), the first oil port of the first electromagnetic regulating valve (514), and the first oil port of the second electromagnetic regulating valve (515).

12. The hydraulic system according to claim 7, further comprising a fourth check valve (9), wherein the fourth check valve (9) is connected between the oil outlet of the second drive pump (2) and the control valve group (5), an oil inlet of the fourth check valve (9) communicates with the oil outlet of the second drive pump (2), and an oil outlet of the fourth check valve (9) separately communicates with the second oil port of the first flow control valve (511) and the first oil port of the pressure reducing valve (516).

13. The hydraulic system according to any one of claims 1 to 8, further comprising a filter (10), wherein the filter (10) is connected between an oil tank and an oil inlet of the first drive pump (1) as well as an oil inlet of the second drive pump (2).

14. The hydraulic system according to any one of claims 2 to 8, wherein the first flow control valve (511) is a three-position four-way proportional reversing valve, and the second flow control valve (512) and the third flow control valve (513) are both two-position three-way proportional reversing valves.

15. The hydraulic system according to any one of claims 1 to 8, wherein the high-pressure drive component comprises a clutch.

16. A vehicle, comprising a motor, an engine, a gearbox, and the hydraulic system as defined in any one of claims 1 to 15, wherein the motor and the engine are both connected to the gearbox, and the hydraulic system is connected to a box body of the gearbox.
